# EUROPEAN PATENT APPLICATION

(11) **EP 1 704 987 A1**
(43) Date of publication of application: **27.09.2006**
(21) Application number: 06006079.5
(22) Date of filing: 24.03.2006
(51) Int. Cl.: B29C 65/56, B65B 13/28, D02G 3/44

(54) **Binding thread for binding packages of pressed waste materials**

(30) Priority: 25.03.2005 IT MI20050508
(71) Applicant: MacPresse Europa S.r.l., 20080 Vernate MI (IT)
(72) Inventor: Scotuzzi, Cristian, 20080 Vernate (Milano) (IT)
(74) Representative: Mayer, Hans Benno

(57) **Abstract**

A binding thread (2) for binding packages of pressed waste materials, to be wound about said packages is made of a synthetic material, and has end portions thereof which are joined by kinking (3).

## Description

### BACKGROUND OF THE INVENTION

The present invention relates to a binding thread for binding packages pressed waste materials, made in a waste material press.

The prior art discloses to feed industrial materials, such as synthetic material, metal sheet material, paper material or refuse, to a pressing space of a large-size press, also known, in which the material is processed by large pistons or rams to transform the waste materials into waste material packages adapted to be sent to an incinerator system.

To provide the made waste packages with a stable and settled form, prior pressed waste material packages were up to now bound by a metal wire, wound in a plurality of turns about the pressed package yet arranged in the press.

The metal binding wire, however, must be removed before feeding the pressed waste material package to the processing oven.

While it has been attempted to send to the incinerating oven the waste material packages together their binding metal wires, this method has provided unsatisfactory results, since the temperature in the incinerating oven was not sufficient to also burn the metal binding wires, and the unburnt binding metal wires accumulated inside the oven, i.e. on the oven grills forming the incinerating oven bottom.

### SUMMARY OF THE INVENTION

Accordingly, the aim of the present invention is to overcome the above mentioned drawbacks of the prior art, by providing a novel thread, for binding waste materials in a waste material or trash press, which is very strong and rigid and adapted to be easily kinked by prior kinking devices used in prior presses, and which, moreover, can also be fully burnt in incinerating ovens.

The above mentioned aim is achieved by a binding thread for binding waste material packages, made in a waste material press, adapted to be wound about said waste material packages, said binding thread being made of a synthetic material and having end portions which, after having wound about the waste material package, are joined by kinking them.

Further advantages and characteristics of the invention will become more apparent hereinafter from the following disclosure and dependant claims.

### BRIEF DESCRIPTION OF THE DRAWINGS

The subject matter of the present invention will be disclosed in a more detailed manner and illustrated hereinafter with reference to the accompanying drawings, where:
Figure 1 is a perspective view showing a pressed waste material or trash package, bound in a press by a binding thread;
Figure 2 shows a terminal portion formed by two kinked binding threads;
Figure 3 is a schematic cross-sectional view showing the binding thread according to the present invention.

### DESCRIPTION OF THE PREFERRED EMBODIMENTS

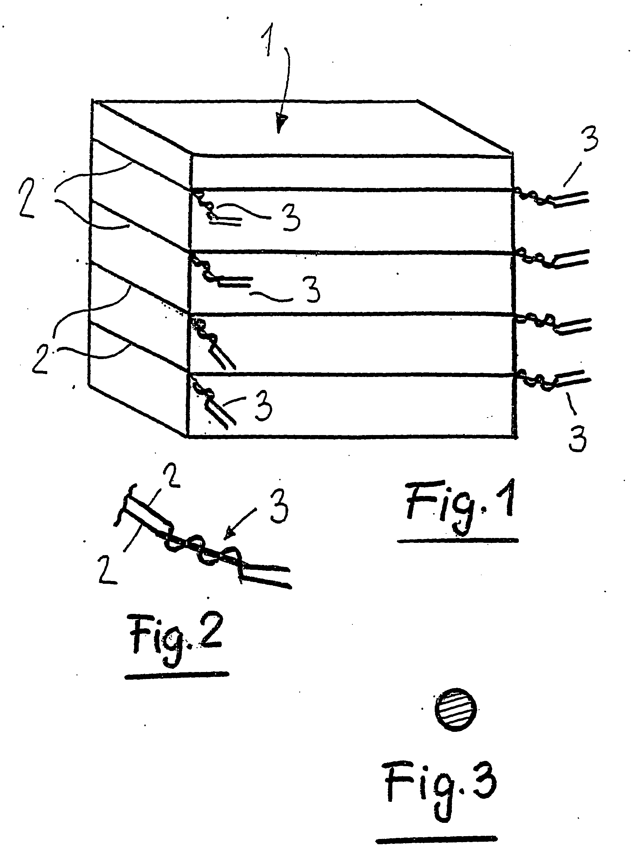

As is shown in figure 1, a waste material or trash package, generally indicated by the reference number 1, is made in a prior industrial waste material or trash press.

This package has advantageously a cubic or parallelepiped configuration.

By known devices to be fitted to the above mentioned type of press, the package 1 is wound, after having being pressed, by binding threads 2, and the end portions of said binding threads are joined by kinking them 3.

Figure 2 schematically shows the end portions of two threads 2, joined by kinking them to one another.

It should be herein pointed out that, in prior trash presses, the pressed material package was bound or fastened by using a metal wire, with the above mentioned drawbacks.

Thus, one skilled in the art was compelled to choose from a plurality of materials, a binding thread having a high strength, adapted to be easily kinked at the free end portions thereof and adapted to be easily burnt at burning temperatures of an incinerating oven.

This objective has been achieved by choosing a synthetic material thread having a stiffness and flexibility similar to those of a steel wire, thereby allowing to use prior wire feeding devices as already present in existing press arrangements.

The chosen wire, in particular, is advantageously made of a polyester material.

However, also a PET thread, i.e. a polyethylene terephthalate thread, has been found to be suitable for the intended object.

Tests have shown that very good results have been achieved by using a thread having a round cross section and a diameter from 2 to 6 mm, advantageously of about 3 mm.

The herein used synthetic thread has a comparatively high stiffness and can be suitably used in known prior devices for feeding threads to presses.

Moreover, the subject thread can be subjected to a high operating tension, thereby providing a very compact package.

Owing to its stiffness, the two end portions of the thread can be easily and perfectly kinked by conventional kinking devices as available in prior presses for pressing industrial waste or trash materials.

## Claims

1. A binding thread for binding waste material packages made in a waste material press, and adapted to be wound about a waste material package to bind it, **characterized in that** said binding thread is made of a synthetic material and has end portions adapted to be joined by kinking to one another.

2. A binding thread, according to claim 1, **characterized in that** said synthetic material thread has a stiffness and a flexibility similar to those of a steel wire.

3. A binding thread, according to claim 1, **characterized in that** said binding thread is fed and wound about said waste material package by known feeding devices as available in prior press arrangements.

4. A binding thread, according to claim 1, **characterized in that** said binding thread is advantageously made of a polyester material.

5. A binding thread, according to claim 1, **characterized in that** said binding thread is made of polyethylene terephthalate (PET) material.

6. A binding thread, according to claim 1, **characterized in that** said binding thread has a round cross section.

7. A binding thread, according to claim 1, **characterized in that** said binding thread has a diameter from 2 to 6 mm.

8. A binding thread, according to claim 7, **characterized in that** said binding thread has a diameter of approximately 3 mm.
